# EUROPEAN PATENT APPLICATION

(11) **EP 1 403 644 A1**
(43) Date of publication of application: **31.03.2004**
(21) Application number: 02021403.7
(22) Date of filing: 25.09.2002
(51) Int. Cl.: G01N 35/00, B01L 9/02

(54) **Fluid analyzer**

(71) Applicant: Agilent Technologies Inc. a Delaware Corporation, Palo Alto, CA 94306 (US)
(72) Inventor: Berndt, Manfred, 76307 Karlsbad (DE); Mora-Fillat, Jose-Angel, 76275 Ettlingen (DE); Reinhardt, Thomas, 76275 Ettlingen (DE); Senf, Manuela, 76137 Karlsruhe (DE)
(74) Representative: Barth, Daniel

(57) **Abstract**

The invention relates to a fluid analyzer (20), in particular, a fluid analyzer for use in microfluid analysis, preferably for use in bioanalysis. The fluid analyzer (20) comprises a sturdy base (28,38) on which instrumentation modules (21,22,24,27) are rigidly mounted, said instrumentation modules include an analysis device (41) for conducting fluid analyses which is preferably configured in the form of a microfluidic chip (41), and a handling device (32), by means of which a storage device, in particular, a well plate (43), incorporating wells for accommodating fluids may be repositioned from a first position to a second position, in which a transport of the fluids from the wells to the analysis device is possible. Another instrumentation module (24) in the form of a device that is also rigidly attached to the base (28) is provided for the purpose of adding fluids to, and/or extracting fluids from, the wells of the storage device (33) and/or adding fluids to, and/or extracting fluids from, the analysis device. It is also provided that a first section or part of that instrumentation modules is arranged on one side of the base (28) and that a second section or part thereof is arranged on the opposite side of the base (28).

## Description

The invention relates to a fluid analyzer, in particular, a fluid analyzer for use in microfluid analysis, preferably for use in the bioanalysis of, for example, DNA, RNA, or proteins, having a sturdy base on which instrumentation modules are rigidly mounted, said instrumentation modules include an analysis device for conducting fluid analyses which is preferably configured in the form of a microfluidic chip and a handling device, by means of which a storage device, in particular, a well plate, incorporating wells for accommodation fluids may be repositioned from a first position to a second position in which a transport of the fluids from the wells to the analysis device is possible.

A fluid analyzer of that type from the firm of Caliper Technologies Corp., USA, has become generally known under the designations "AMS 90" and "AMS 90 SE" and is employed in microfluid bioanalyses. That fluid analyzer comprises a sturdy baseplate on one of whose sides instrumentation modules are mounted such that they extend upward. The instrumentation modules provided are a special microfluidic chip for performing analyses and a handling device, by means of which a well plate having numerous wells may be transported from an internal transfer position to a working position and back again. Microtitration plates of that type typically have 96 or 384 wells, and may have as many as 1,536 wells. At the working position, fluids present in the wells, i.e., samples to be analyzed, may be transferred to the microfluidic chip for analysis via lengths of tubing that are connected thereto, which allows automatically analyzing the samples involved.

Although this particular fluid analyzer already has, for a laboratory instrument, beneficially compact dimensions, it has a number of disadvantages that must be accepted. For example, the microfluidic chip must be prepared for analysis by manually pipetting working fluids, in particular, buffer solutions, into it, which is tedious and time-consuming.

Moreover, this particular instrument is designed such that the tolerances on the differences in the lengths of the individual instrumentation modules are relatively large, which results in the handling device having to be reinitialized employing a time-consuming "teach-in" process every time the analyzer is switched on.

Other bioanalyzers are known to the applicant under the designation "Agilent 2100 Bioanalyzer." Although this particular fluid analyzer also employs the aforementioned microfluidic chip, both the fluids needed for preparing the microfluidic chip and the fluid samples to be analyzed must be inserted employing manually operated pipetting devices, which is a tedious, time-consuming, process.

Although both of the aforementioned fluid analyzers allow performing high-precision fluid analyses, their microfluidic chips must invariably be manually prepared, i.e., filled with working fluids.

Moreover, the desired fluid-dilution sequences, if any, have thus far to be obtained via a separate reformatting process performed outside the analyzer. _Once the unformatted fluids have been inserted into the wells on the well plate and/or into the microfluidic chip, they must be transferred to the analyzer. This is also tedious and time-consuming, and the reformatting devices known to date take up additional space.

The problem addressed by the invention is thus creating a fluid analyzer with which the aforementioned disadvantages may be avoided.

The invention solves that problem by proposing a fluid analyzer having the features set out in claim 1, in particular, in that an additional instrumentation module in the form of a device that is also rigidly attached to the base that is provided for the purpose of adding fluids to, and/or extracting fluids from, the wells of the storage device and/or adding fluids to, and/or extracting fluids from, the analysis device, and that a first part or section of the instrumentation modules is arranged on one side of the base and a second part or section thereof is arranged on the opposite side of the base.

One of the primary objectives of the invention is creating a common reference plane, formed by the base, for all major instrumentation modules and allowing a defined positioning of instrumentation modules relative to one another to within narrow tolerance ranges by shifting the positions of the instrumentation modules in opposing directions and arranging them such that they protruded from both sides of this reference plane, which will allow a highly accurate, highly reproducible, positioning of the handling device as it is driven up to the respective modules. These measures also create useful opportunities for simply, automatically, initializing a fluid analyzer.

Employing these measures in accordance with the invention will allow holding the tolerances on the positionings of the individual instrumentation modules relative to one another to a cubical volume having an edge length of only about 0.2 mm, which will allow providing every instrumentation module with a reference object, for example, a pin, in a simple manner. This reference object may be engaged by the, preferably three-axis, handling device via, e.g., a hole therein that mates to the pin, in order to allow, with the aid of a sensor, determining the exact locations of the instrumentation modules relative to one another or the locations of the instrumentation modules relative to the handling device. In cases where direct-drive, electromagnetic, linear motors are employed for driving the individual axes of the three-axis handling device, their magnetic-field sensors may beneficially be employed for implementing an integrated positioning acquisition. A three-axis handling device of that type is described in European Patent Application 01129773.6, whose content is herewith subsumed in its entirety.

Due to the modularity chosen for the individual instrumentation modules employed, they may be installed and removed in a simple manner, and therefore are also easily interchangeable.

Due to the beneficial arrangement of parts or sections of the instrumentation modules such that they protrude from both sides of the reference plane, a device for adding fluids to, and/or extracting fluids from, the wells of the storage device and/or adding fluids to, or extracting fluids from, the analysis device may now, for the first time, be incorporated into a single instrument in a manner that yields a highly compact design. A fluid analyzer having greater functionality that is simultaneously in full compliance with the space-occupation limitations imposed on laboratory instruments is thus now available.

Under a beneficial embodiment of the invention, it may be provided that the base is a supporting framework that has at least one opening through which a part or section of the instrumentation modules extends, which will allow favorable integration and accessibility relationships, combined with a particularly compact arrangement of the instrumentation modules, and, therefore, allow configuring a particularly compactly designed fluid analyzer.

Under a useful, improved, embodiment, a detector for detecting a parameter characteristic of the fluids involved, and/or a transfer device for transferring the storage device from an external location to the vicinity of the first position of the handling device and/or back to its original location, and/or a storage device for picking up and storing the storage device and/or the analysis device may be provided in the form of another instrumentation module that is rigidly attached to the base, which will allow achieving an even greater functionality of the fluid analyzer, combined with a more compact design and better positioning accuracy.

In conjunction therewith, it will be useful if the detector is configured in the form of a laser-induced-fluorescence spectrometer or a mass spectrometer.

It will also be useful if the transfer device is configured in the form of a pivoting carousel and/or if the storage device has a storage compartment for storing the storage device and/or analysis device that preferably may be cooled down to low temperatures.

The aforementioned measures may be arbitrarily combined to the extents feasible and, either alone, or in combination with one another, allow configuring a highly integrated, compactly designed, fluid analyzer that allows a fully automated preparation and conduct of fluid analyses, as well as a simple, fully automated, initialization, combined with highly accurate, highly reproducible, handling operations.

Other benefits, features, and standpoints of the invention will be found in the descriptive section that follows, which describes a preferred embodiment of the invention, based on the accompanying figures.

Those figures depict:
- Fig. 1: A three-dimensional, view of a fluid analyzer in accordance with the invention that has been partially sectioned in order to clarify individual components thereof;
- Fig. 2: a three-dimensional, exploded, view of the base, which is configured in the form of a supporting framework, of the fluid analyzer depicted in Fig. 1, complete with major instrumentation modules involved;
- Fig. 3: a three-dimensional, first, side view of those components shown in Fig. 2, depicted in fully assembled form;
- Fig. 4: a three-dimensional, second, side view of those components shown in Fig. 2.

The fluid analyzer 20 depicted in the figures particularly finds application in the field of biotechnology and in the pharmaceutical industry, where it is employed in the fully automated analysis of nucleic acids and proteins at moderate to high sample throughput rates of around 50 to 2,000 samples per day, or as many as 70,000 samples per week. However, the fluid analyzer 20 may also preferentially be employed as a preliminary stage on various types of mass spectrometers, where it may be employed for identifying and quantifying small molecules and peptides.

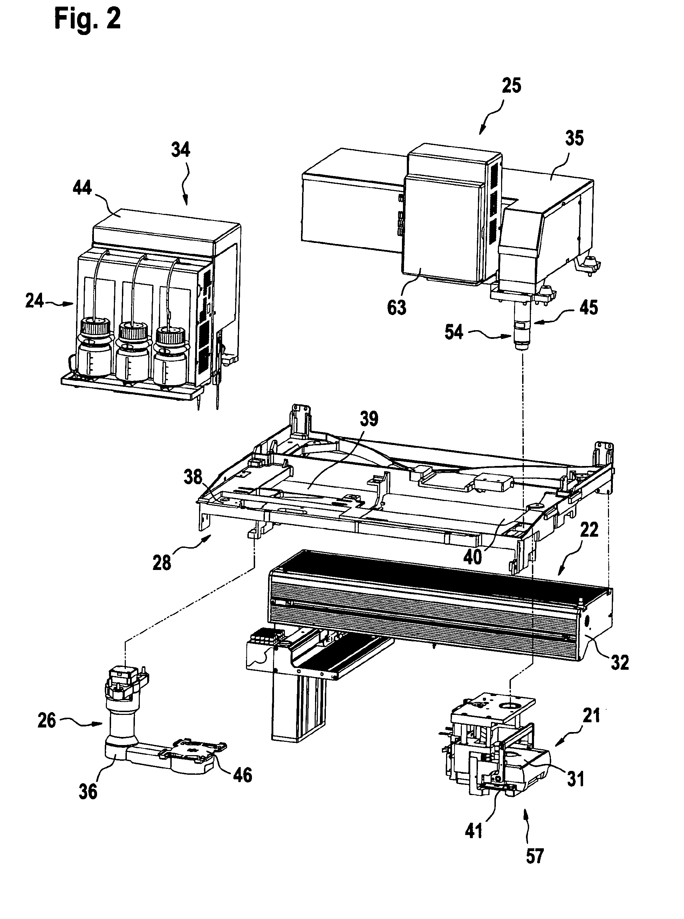

The fluid analyzer 20 comprises a sturdy supporting structure 30, on which a base 28 incorporating a sturdy frame 38 is horizontally arranged at about halfway up its full height. A housing 60 is also "flexibly" installed on the supporting structure 30, i.e., installed in the form of individual, readily interchangeable, housing modules that allow accessing analyzer components that lie behind them, whenever necessary. The housing 60 also incorporates a cover panel 62 that may be rotated in a vertical plane, about a horizontal axis of rotation, which, in its raised position, allows accessing analyzer components, in particular, a refilling and pipetting device 44 and a pressurization/vacuum system 63 for the microfluidic chip 41 (cf. Fig. 2), lying beneath it from outside the housing.

A characteristic feature of the fluid analyzer 20 is that major instrumentation modules 21, 22, 24, 25, 26, 27, in particular, the instrumentation modules 21, 22, 24 are rigidly attached to the frame 38 such that a first section 51 of the instrumentation modules are arranged on the upper side of the base 28 and a second section 52 of the instrumentation modules is arranged on the opposite side, in this case, the underside, thereof, i.e., is arranged such that it extends in an opposite direction. This measure allows minimizing the tolerances on the differences in the lengths of the individual modules, and even eliminating those tolerances in some cases, where, in the case of the sample embodiment show, the instrumentation modules 24 and 25, i.e., the device 34 for adding and/or extracting fluids, the detector 25, and the high-voltage power supply 55 are arranged on the frame 38 and essentially protrude upward therefrom. On the other hand, virtually all other instrumentation modules 21, 22, 26, 27, i.e., the analysis device 31, the handling device 32, the transfer device 36, the storage device 37, the voltage supply 59, and the thermostat 56, are arranged beneath the frame 38, i.e., are suspended thereon, and essentially protrude downward therefrom. All of these instrumentation modules are rigidly attached to the frame supported by the supporting structure 30.

Instrumentation module 21 is a microfluidic chip 41, which is also termed an "analysis device" 31, that is arranged on a baseplate 48. Employed as microfluidic chips are both so-called "single-sipper chips" and "multisipper chips," either of which allows analyzing fluid samples.

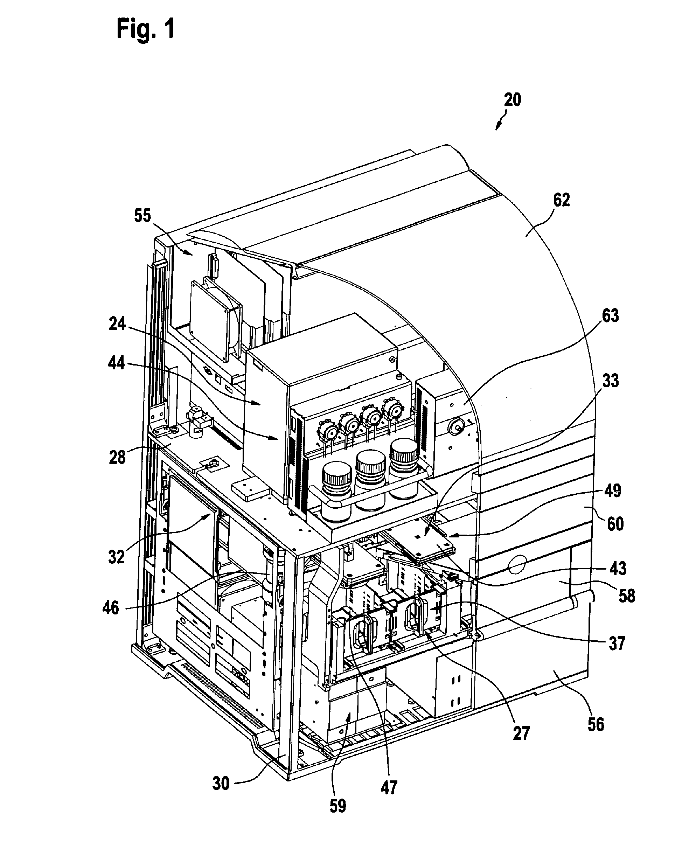

Instrumentation module 22 is a three-axis handling device 32 that is equipped with an X-axis 66, a Y-axis 67, and a Z-axis 68. These axes 66, 67, 68 allow travel along the mutually orthogonal X-direction, Y-direction, and Z-direction, respectively. A gripper device 49 (cf. Fig. 1) with which the well plate 43 employed as a storage device 33 for storing fluid substances and/or the baseplate 48 incorporating the microfluidic chip may be gripped and transported to the desired positions, is mounted on the Y-axis.

Another major instrumentation module 24 is in the form of a device 34 for adding and/or extracting fluids, that is here configured as a refilling and pipetting device 44 that may be employed for extending analytical periods and/or increasing sample throughput. This refilling and pipetting device may also be employed for reformatting, i.e., for preparing dilution sequences, wherein those fluids corresponding to a particular dilution may be transferred to the wells in the well plate 43 via a pipette tip 61 that extends downward, through an opening 39 in the frame 38.

This refilling device 44 may be employed for replenishing reagents needed for the various applications. These reagents, which are needed for refilling the microfluidic chip 41, are accommodated in wells on the well plate 43, and may be stored on the storage device 37, i.e., on the shelf-like hotels.

A typical refilling procedure might proceed as follows: A microdfluidic chip 41 picked up off the baseplate 48 is initially transferred from the chip environment to the refilling device 44 by the three-axis handling device 32. The wells of the microfluidic chip 41 are then emptied by the pipette tip 61 or a motor-driven hypodermic needle. The microfluidic chip 41 picked up off the baseplate 48 is subsequently transferred by the three-axis handling device 32 to a parking position, preferably to a parking position on the carousel 46. A well plate 43, whose wells have already been filled with fresh reagents, is then transferred from the storage device 37 to the refilling device 44 by the three-axis handling device 32. The old reagents are then transferred to waste-disposal wells that are located either on this well plate 43 or on a storage facility that comoves with the three-axis handling device 32. The fresh reagents may then be drawn off from the wells 29 on the well plate 43 by the pipetter of the refilling device 44 and the well plate 43 subsequently brought back to the storage device 37. The temporarily stored microfluidic chip 41 may then be brought from its parking position to a position where it may be refilled by the refilling device 44 by the three-axis handling device in order that it may subsequently be refilled with fresh reagents. The refilling procedure will have been concluded as soon as the microfluidic chip 41 picked up off the baseplate 48 has been returned to the chip environment by the three-axis handling device 32. Analyses may then be continued.

Another instrumentation module 25 concerns the detector 35, which, in the case of this sample embodiment, is configured in the form of a confocal laser-induced-fluorescence spectrometer 45. It should be obvious that a mass spectrometer could be employed in addition to, or instead of, the fluorescence spectrometer 45, or set up at some location outside the instrument.

Another instrumentation module 26 is configured in the form of carousel 46, which is also termed a "transfer device" 36, that is also rigidly attached to the base 28. This carousel 46 is equipped with a stepper motor about a vertical axis of rotation 64 in the directions indicated by the double-headed arrow 65, transferred from the location inside the instrument shown on the figures to a location outside the instrument, which has not been specifically indicated on the figures, and back again. In this manner, an interface that, particularly whenever there is need for increasing sample throughputs, will allow picking up well plates 43 and then transferring them to the location inside the instrument shown in the figures employing a handling device located outside the instrument is created. At that location, the well plates 43 may be gripped by the gripping device 49 of the instrument's internal handling device 32 and then brought up to the microfluidic chip 41, which is also termed an "analysis device" 31, from below by the handling device 32.

Yet another major instrumentation module 27 is configured in the form of a storage device 37, which is also termed a "hotel," that may be employed for accommodating and temporarily storing well plates 43 and/or microfluidic chips 41, which should preferably be mounted on baseplates 48. Considering that, particularly in the case of applications in the field of bioanalysis, the fluids to be stored in the wells of the well plate 43 and/or the wells of the microfluidic chip 41, should preferably be stored at reduced temperatures below room temperature, in particular, at temperatures of about 4°C, the storage device 37 incorporates several, coolable, storage compartments 47 which are arranged shelf like and that may be cooled down by a thermostat 56 that is arranged beneath the storage device 37. This storage device 37 is accessible via two doors 58 that open outward in order to allow replacing well plates 43 and/or microfluidic chips 41.

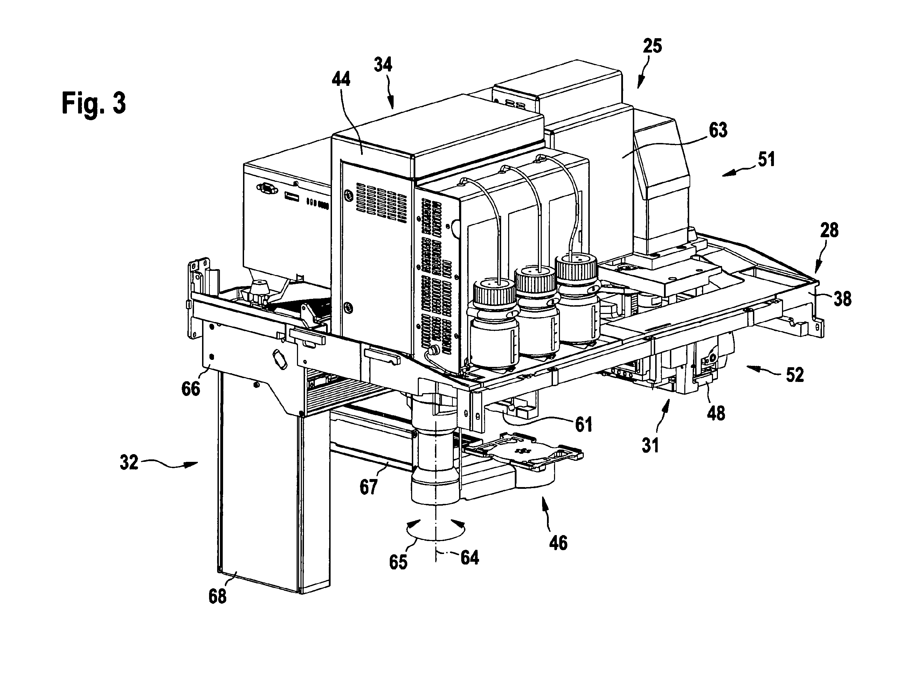

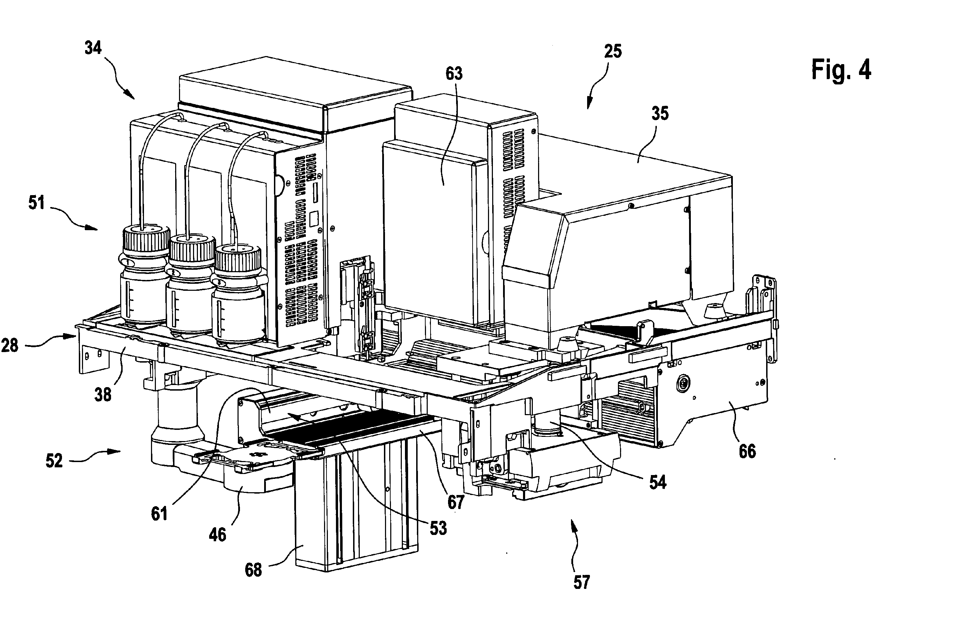

As may be seen, in particular, from Figs. 3 and 4, when fully assembled, a section 53 of the device 34 for adding and/or extracting fluids, here, in particular, the pipette tip 61, protrudes through an opening 39 in the base 28. Moreover, a section 52 of instrumentation module 25, in this particular case, the fluorescence spectrometer 45, protrudes through another opening 40 in the base 28. These sections 53, 54 thus form pseudo-interfaces between the first section 51 of the instrumentation modules that protrudes upward from the frame 38 and the second section 52 of the instrumentation modules that protrudes downward from the frame 38.

The other instrumentation modules provided are, in particular, an instrumentation voltage supply 59 and a high-voltage power supply 55 for the microfluidic chip 41, which, in the case of this sample embodiment, is specifically applicable to electrophoretic separations, where, as is well-known, high voltages are required.

A loading device 57 that is employed for transferring fluids from the wells in the microtitration plate 43 to the microfluidic chip 41, or vice versa, is coupled to the microfluidic chip 41. Provided as the driving force for those transferals is compressed air or a vacuum for the so-called "chip environment" that may be generated by a pressurization/vacuum system 63.

## Claims

1. A fluid analyzer, in particular, a fluid analyzer for use in microfluid analysis, preferably for use in bioanalysis, having a sturdy base on which instrumentation modules are rigidly mounted, said instrumentation modules include an analysis device for conducting fluid analyses which is preferably configured in the form of a microfluid chip, and a handling device, by means of which a storage device, in particular, a well plate, incorporating wells for accommodating fluids may be moved from a first position to a second position, in which a transport of the fluids from the wells to the analysis device is possible,
**characterized in that**
an additional instrumentation module (24) is provided in the form of a device (34) for adding fluids to, and/or extracting fluids from, the wells of the storage device (33) and/or adding fluids to, or extracting fluids from, the analysis device (31) that is also rigidly mounted on the base (28), and that a first part or section (51) of the instrumentation modules is arranged on one side of the base (28) and a second part or section (52) of the instrumentation modules is arranged on the opposite side of the base (28).

2. A fluid analyzer according to claim 1, wherein the base (28) is a supporting frame (38) having at least one opening (39, 40) through which a part or section (53, 54) of the respective instrumentation modules (24, 25) extends.

3. A fluid analyzer according to claim 1 or claim 2, wherein other instrumentation modules (25, 26, 27) that are rigidly attached to the base (28) are provided with a detector (35) for detecting an analytical parameter related to the fluid involved, and/or a transfer device (36) for transferring the storage device (33) from an external location to the vicinity of the first position of the handling device (32) and/or back to its original location, and/or a storage device (37) for accommodating and storing the storage device (33) and/or the analysis device (31).

4. A fluid analyzer according to claim 3, wherein the detector (35) is a laser-induced-fluorescence spectrometer (45) and/or a mass spectrometer.

5. A fluid analyzer according to claim 3 or claim 4, wherein the transfer device (36) is a pivoting carousel (46).

6. A fluid analyzer according to any of claims 3 - 5, wherein the storage device (37) has a storage compartment (47) for storing the storage device (33) and/or analysis device (31) that preferably may be cooled down to low temperatures.
